# EUROPÄISCHE PATENTANMELDUNG

(11) **EP 4 130 792 A1**
(43) Veröffentlichungstag der Anmeldung: **08.02.2023**
(21) Anmeldenummer: 21190131.9
(22) Anmeldetag: 06.08.2021
(51) Int. Cl.: G01S 13/88, G01S 13/90, G01S 13/89, G01S 7/41

(54) **VERFAHREN ZUR ÜBERWACHUNG DER ALTERUNG EINER OBERFLÄCHE**

(71) Anmelder: Siemens Aktiengesellschaft, 80333 München (DE)
(72) Erfinder: Baar, Christian, 85757 Karlsfeld (DE); Ganster, Axel, 84419 Schwindegg (DE); Kriegel, Kai, 81739 München (DE); Mitic, Gerhard, 81827 München (DE); Stegmeier, Stefan, 81825 München (DE); Weisbrod, Erik, 81369 München (DE)

(57) **Zusammenfassung**

Es wird ein Verfahren zur Überwachung der Alterung einer Oberfläche (s) einer Vorrichtung (1) angegeben,
- wobei die Vorrichtung (1) im Bereich ihrer außenliegenden Oberfläche (s) ein Begrenzungselement (10) aufweist,
- wobei das Begrenzungselement (10) mit wenigstens einer Hochfrequenz-Antenne (100) und insbesondere mit einem flächigen Gitter aus einer Vielzahl von Hochfrequenz-Antennen (100) versehen ist,
- wobei das Verfahren wenigstens die folgenden Schritte aufweist:
a) Einstrahlung von Hochfrequenzwellen (HF1) auf die Oberfläche (s) mittels einer Sendeeinrichtung (A1) eines Radargeräts (R),
b) Erfassung von durch die Oberfläche reflektierten Hochfrequenzwellen (HF2) mittels einer Empfangseinrichtung (A2) eines Radargeräts (R),
c) Vergleich eines so erhaltenen Messsignals mit einem Referenzsignal einer unbeschädigten Vorrichtung.

Weiterhin wird eine Vorrichtung (1) angegeben, die zur Überwachung der Alterung ihrer Oberfläche mit dem beschriebenen Verfahren ausgelegt ist.

## Beschreibung

Die vorliegende Erfindung betrifft ein Verfahren zur Überwachung der Alterung einer Oberfläche einer Vorrichtung, wobei die Vorrichtung im Bereich ihrer außenliegenden Oberfläche ein Begrenzungselement aufweist. Weiterhin betrifft die Erfindung eine Vorrichtung, die sich zur Überwachung mit einem solchen Verfahren eignet.

Nach dem Stand der Technik wird die Alterung der Oberflächen von technischen Geräten und anderen Objekten meist durch optisch-visuelle Methoden überwacht. So werden beispielsweise Oberflächen von medizinischen Geräten, von Fahrzeugen oder von industriellen Fertigungsanlagen regelmäßig optisch untersucht, um eine potenzielle Schädigung beim Betrieb zu erkennen und zu dokumentieren. Eine solche Überwachung erfolgt häufig automatisiert, d.h. mit Hilfe von automatischer Bilderkennung, mit der bestimmte Typen von Schäden erkannt werden können. Meist muss hierzu die gesamte Oberfläche ortsaufgelöst optisch vermessen werden, was relativ aufwendig sein kann.

Bei vielen Anwendungen, insbesondere im Bereich der Medizintechnik, sind die Anforderungen an die Genauigkeit einer solchen Oberflächen-Überwachung sehr hoch. So kann es zum Beispiel erforderlich sein, auch sehr feine Risse oder eine leichte Erhöhung der Rauigkeit zu erkennen, da im Bereich solcher Schäden eine vermehrte Ablagerung von Keimen auftreten kann. Dies ist aber gerade im medizinischen Bereich unbedingt zu vermeiden, weshalb hier die Anforderungen an die Früherkennung von Oberflächen-Schäden besonders hoch sind. Aber auch im Bereich von Fahrzeugen oder industriellen Anlagen kann es wünschenswert sein, sowohl kleine lokale Schäden als auch größerflächige Deformationen während der Betriebsdauer der Vorrichtung zu erkennen. Es besteht daher ein Bedarf für ein alternatives Überwachungs-Verfahren für die zuverlässige Erkennung von alterungsbedingten Schäden an der Oberfläche einer Vorrichtung. Dies können sowohl Schädigungen durch Umwelteinflüsse als auch mechanische Abnutzungen durch den Betrieb der Vorrichtung sein. Eine zuverlässige Erkennung solcher Alterungs-Effekte ermöglicht auch ein rechtzeitiges Eingreifen, wobei beispielsweise ein gealtertes Gerät rechtzeitig ausgetauscht wird oder eine gealterte Oberfläche wieder aufbereitet wird, bevor es zu einer Fehlfunktion bei dem Einsatz der Vorrichtung kommt. So kann beispielsweise eine überhöhte Keimbelastung der Oberfläche eines medizinischen Geräts oder einer anderen Art von Vorrichtung durch rechtzeitige Gegenmaßnahmen vermieden werden.

Aufgabe der Erfindung ist es somit, ein alternatives Überwachungs-Verfahren für eine Oberfläche einer Vorrichtung anzugeben, welches vergleichsweise einfach automatisiert durchzuführen ist und mit welchem alterungsbedingte Schäden zuverlässig erkannt werden können. Eine weitere Aufgabe ist es, eine Vorrichtung anzugeben, welche sich besonders zur Überwachung mit einem solchen Verfahren eignet.

Diese Aufgaben werden durch das in Anspruch 1 beschriebene Verfahren und die in Anspruch 15 beschriebene Vorrichtung gelöst. Das erfindungsgemäße Verfahren dient zur Überwachung der Alterung einer Oberfläche einer Vorrichtung, wobei die Vorrichtung im Bereich ihrer außenliegenden Oberfläche ein Begrenzungselement aufweist, welches mit wenigstens einer Hochfrequenz-Antenne und idealerweise mit einem flächigen Gitter aus einer Vielzahl von Hochfrequenz-Antennen versehen ist. Das Verfahren weist wenigstens die folgenden Schritte auf:
a) Einstrahlung von Hochfrequenzwellen auf die Oberfläche mittels einer Sendeeinrichtung eines Radargeräts,
b) Erfassung von durch die Oberfläche reflektierten Hochfrequenzwellen mittels einer Empfangseinrichtung eines Radargeräts,
c) Vergleich eines so erhaltenen Messsignals mit einem Referenzsignal einer unbeschädigten Vorrichtung.

Bei dem erfindungsgemäßen Verfahren wird die Tatsache ausgenutzt, dass mittels einer Radarmessung die Beschaffenheit einer Vorrichtung auch über einen längeren Betriebszeitraum mit relativ geringem apparativem Aufwand überwacht werden kann. Allerdings ist ohne besondere Maßnahmen der Einfluss der lokalen Oberflächen-Beschaffenheit auf eine solche Radarmessung nur relativ gering, weshalb kleinere Beschädigungen im Bereich der Oberflächen normalerweise schwer durch Hochfrequenz-Messungen zu detektieren sind. Um die Empfindlichkeit in Bezug auf Oberflächen-Schäden zu verbessern, wird daher die Vorrichtung im Bereich ihres Begrenzungselements durch wenigstens eine Hochfrequenz-Antenne und besonders vorteilhaft durch ein regelmäßiges Gitter von Hochfrequenz-Antennen funktionalisiert. Diese Hochfrequenz-Antennen reflektieren zumindest einen Teil des von der Sendeeinrichtung ausgesendeten Signals, und das reflektierte Signal wird von der Empfangseinrichtung gemessen. Insgesamt wird so ein Messsignal erzeugt, welches relativ empfindlich von dem Zustand der wenigstens einen Hochfrequenz-Antenne abhängt. So kann eine lokale Beschädigung der Oberfläche der Vorrichtung zu einer Verzerrung der Antennengeometrie führen (beispielsweise zu einer Dehnung oder Stauchung oder sogar einer Schädigung der Antenne), so dass eine Alterung der Oberfläche zu einer deutlichen Änderung des mit dem Radargerät gemessenen Hochfrequenz-Signals führt. Es kann also schon eine einzelne oberflächennahe Hochfrequenz-Antenne ausreichen, um eine Schädigung der Oberfläche über ihren Einfluss auf die Radarmessung sichtbar zu machen. Besonders empfindlich ist das Verfahren, wenn nicht nur eine einzelne Antenne, sondern ein ganzes Array von oberflächennahen Hochfrequenz-Antennen auf der Vorrichtung angeordnet ist. Das gemessene Signal wird dann nicht nur durch Veränderungen im Bereich einzelner Hochfrequenz-Antennen, sondern auch ggf. durch eine Störung der Regelmäßigkeit des Gitters beeinflusst. Insgesamt sind alterungsbedingte Schäden einer Objekt-Oberfläche durch die Wechselwirkung von Hochfrequenzwellen mit einem solchen regelmäßigen Antennen-Array sehr zuverlässig nachweisbar. Die entsprechende Funktionalisierung der Oberfläche bedeutet zwar einen zusätzlichen Aufwand bei der Herstellung der Vorrichtung. Dadurch wird jedoch erreicht, dass eine Alterung der Vorrichtung auch über längere Betriebszeiträume relativ leicht und zuverlässig mittels Radarmessung überwacht werden kann. Dieses Messverfahren lässt sich leicht automatisieren, und es kann eine zuverlässige, etablierte Messtechnik in grundsätzlich bekannter Weise zum Einsatz kommen.

Die erfindungsgemäße Vorrichtung weist im Bereich ihrer außenliegenden Oberfläche ein Begrenzungselement auf, welches mit einem regelmäßigen flächigen Gitter aus einer Vielzahl von Hochfrequenz-Antennen versehen ist. Dabei ist die Vorrichtung entweder ein Gerät der Medizintechnik oder ein Fahrzeug oder eine Industrieanlage. Bei solchen Vorrichtungen ergibt sich typischerweise keine Notwendigkeit, einen oberflächennahen Bereich mit einem solchen Array von Hochfrequenz-Antennen zu funktionalisieren. Im Rahmen der vorliegenden Erfindung wird eine solche Funktionalisierung aber dazu genutzt, die Überwachung der Oberflächen-Alterung mit dem erfindungsgemäßen Verfahren zu ermöglichen. Die Vorteile der erfindungsgemäßen Vorrichtung ergeben sich analog zu den oben beschriebenen Vorteilen des erfindungsgemäßen Überwachungsverfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens und der Vorrichtung allgemein vorteilhaft miteinander kombiniert werden.

So kann das Begrenzungselement gemäß einer besonders vorteilhaften Ausführungsform mit einem regelmäßigen flächigen Gitter aus einer Vielzahl von Hochfrequenz-Antennen versehen sein. Es kann sich also mit anderen Worten um ein zweidimensionales Array solcher Antennen handeln, welches über die Oberfläche verteilt ist. Dabei kann die Anzahl der Antennen beispielsweise zwischen einigen 10 bis mehreren 10000 oder noch höher liegen. Wenn diese Vielzahl von Antennen untereinander eine regelmäßige Anordnung bilden, dann kann eine Störung dieser Regelmäßigkeit (beispielsweise durch Schädigung oder Veränderung einzelner Antennen oder auch eine Änderung der Wiederholungslänge durch lokale Dehnung oder Stauchung der Oberfläche) sehr zuverlässig mit einer Radarmessung detektiert werden. Insbesondere kann es sich bei diesen Hochfrequenz-Antennen um eine "zusätzliche" Funktionalisierung der Oberfläche der Vorrichtung handeln. Mit anderen Worten weisen dann diese Antennen neben ihrer Funktion bei der Überwachung der Oberfläche keine anderweitige elektrische Funktion für den Betrieb der Vorrichtung auf. Sie sind dann ausschließlich dazu vorgesehen, die Durchführung des erfindungsgemäßen Verfahrens zu ermöglichen, und die Empfindlichkeit der Radarmessung in Bezug auf Oberflächen-Veränderungen zu erhöhen.

Bei einer vorteilhaften Ausführungsform können die einzelnen Hochfrequenz-Antennen untereinander gleich ausgestaltet sein, so dass sich in dem Array ein regelmäßiges Muster aus gleichartigen Antennen ergibt. Jede Elementarzelle dieses Musters weist also genau eine Antenne auf. Alternativ ist es aber auch möglich und unter Umständen vorteilhaft, dass die Antennen-Anordnung mehrere unterschiedliche Antennen umfasst. Auch hier kann ein regelmäßiges Muster aus sogenannten Überzellen vorliegen, bei denen dann jede Überzelle mehrere unterschiedliche Antennen enthält. Die Überzellen wiederholen sich dann ebenfalls in einem regelmäßigen zweidimensionalen Muster. Dieser komplexere Aufbau der Antennen-Anordnung kann vorteilhaft sein, um bestimmte Eigenschaften der Wechselwirkung mit den Hochfrequenzwellen besonders gezielt einstellen zu können.

Das regelmäßige flächige Gitter kann sich besonders auf einen überwiegenden Teil der Oberfläche der Vorrichtung erstrecken. Dies erlaubt eine Überwachung der Oberflächen-Alterung für die gesamte Vorrichtung. Dabei muss der Füllfaktor dieses Gittes nicht zwangsläufig besonders hoch sein. Ein hoher Füllfaktor (beispielsweise von 30% oder mehr) ist zwar vorteilhaft, um auch kleine lokale Schädigungen zuverlässig erkennen zu können. Allerdings kann auch bei einem relativ dünn besetzten Gitter (bei dem nur in größeren Abständen einzelne Antennen oder Gruppen von Antennen angeordneten sind) eine Detektion von Verzerrungen - also z.B. Dehnungen, Stauchungen oder Verwölbungen - mit Hilfe der Radarmessung ermöglicht werden, da das gemessene Gesamtsignal sehr empfindlich von den Abständen der Einzel-Antennen abhängt.

Allgemein vorteilhaft können die einzelnen Hochfrequenz-Antennen oberflächennah angeordnet sein. So kann ihr Abstand zu der Außenfläche der Vorrichtung vorteilhaft bei höchstens 1 mm liegen, insbesondere sogar nur bei 10 µm oder weniger.

Gemäß einer allgemein vorteilhaften Ausführungsform wird das Referenzsignal durch eine vorhergehende Messung an derselben Vorrichtung im ungealterten Zustand erhalten. Mit anderen Worten gehen den Schritten a) und b) die entsprechenden Schritte a0) und b0) voraus, wobei in Schritt a0) Hochfrequenzwellen auf die ungealterte Oberfläche eingestrahlt werden und in Schritt b0) die durch die ungealterte Oberfläche reflektierten Hochfrequenzwellen erfasst werden. Analog wie bei den Schritten a) und b) können auch die Schritte a0) und b0) gleichzeitig durchgeführt werden. Bei dieser Ausführungsform wird also die Referenzmessung durch eine entsprechende frühere Messung an derselben Vorrichtung erhalten, bevor diese einem Alterungsprozess ausgesetzt ist. Das Ergebnis dieser Referenzmessung wird abgespeichert und nach den Messschritten a) und b) mit dem späteren Messergebnis verglichen. Zwischen der Referenzmessung und der späteren Messung kann ein relativ langer Zeitraum liegen, wodurch eine Überwachung der Alterung über längere Zeiträume ermöglicht wird. So kann dieser Zeitraum beispielsweise mehrere Monate und insbesondere sogar mehrere Jahre betragen. Die Schritte a) bis c) können bei dem Verfahren auch jeweils mehrfach durchgeführt werden, wodurch eine kontinuierliche Überwachung der Oberflächen-Alterung über einen langen Zeitraum hinweg ermöglicht wird.

Um die Vorteile der Erfindung zu verwirklichen, ist es allerdings nicht zwingend erforderlich, dass die Referenzmessung an derselben Vorrichtung durchgeführt wird. Falls kein Referenzsignal für einen ungealterten Zustand derselben Vorrichtung mehr vorliegt, ist es alternativ auch möglich, eine baugleiche unbeschädigte Vorrichtung für eine solche Referenzmessung zu verwenden.

Allgemein vorteilhaft kann das Verfahren die folgenden Schritte aufweisen:
c1) Bildung eines Differenzsignals zwischen dem Messsignal und dem Referenzsignal und
d) Klassifizierung der Alterung der Oberfläche anhand des Vergleichs des Differenzsignals mit ein oder mehreren vordefinierten Schwellwerten.
Schritt c1) bildet eine konkrete Realisierung für den in Schritt c) durchzuführenden Vergleich zwischen Messsignal und Referenzsignal. Schritt d) kann dann im Anschluss an diesen Schritt c1) erfolgen. So kann insbesondere bei der Überschreitung eines Schwellwerts für das Differenz-Signal auf eine Beschädigung der Oberfläche geschlossen werden. Mit dieser Ausführungsform des Verfahrens kann so eine objektive Klassifizierung des Alterungszustands erreicht werden. Wenn mehrere vordefinierte Schwellwerte verwendet werden, kann eine Einteilung in mehr als zwei Alterungs-Klassen erfolgen. Auf diese Weise können beispielsweise zwischen einer Klassifizierung "in Ordnung" und einer Klassifizierung "zu stark beschädigt" optional noch ein oder mehrere Zwischenstufen vorgesehen sein, bei denen die Vorrichtung zwar noch nicht sofort ausgetauscht oder repariert werden muss, aber z.B. in Zukunft engmaschiger auf eine fortschreitende Alterung hin beobachtet wird. Wenn eine valide Datenbasis mit einer ausreichenden Zahl von Differenzmessungen zur Verfügung steht, kann aus einer Vielzahl von entsprechenden Messungen bei vorheriger Definition der Klassifizierungen und der Schwellwerte darüber hinaus auch gegebenenfalls die verbleibende Lebensdauer abgeschätzt werden.

Das Differenzsignal kann alternativ entweder aus der Differenz zweier Gesamtsignale oder auch aus der Differenz entsprechender Signalspektren und/oder entsprechender ortsaufgelöster Bilder erhalten werden. Bei der Differenzbildung zwischen Spektren und/oder Bildern kann beispielsweise zunächst das Signal über das ganze Differenz-Spektrum oder Differenz-Bild aufsummiert werden, und das erhaltene Summensignal kann mit dem betreffenden Schwellwert verglichen werden. Alternativ kann aber auch das ganze Differenz-Spektrum bzw. Differenz-Bild mit dem Schwellwert verglichen werden, und eine bestimmte Klassifizierung kann abhängig davon erfolgen, ob auch nur an irgendeiner Stelle im Spektrum oder Bild ein vordefinierter Schwellwert überschritten wird. Bei der zweiten Alternative kann möglicherweise aus dem Ort der Schwellüberschreitung auf den Ort der Beschädigung geschlossen werden und/oder aus der Frequenz der Schwellüberschreitung kann auf die Art der Beschädigung geschlossen werden.

Gemäß einer vorteilhaften Ausführungsform kann die effektive Länge der einzelnen Hochfrequenz-Antennen zwischen 1 mm und 10 cm liegen. Allgemein vorteilhaft liegt die effektive Länge der einzelnen Antennen etwa in derselben Größenordnung wie die Wellenlänge λ der für die Messung verwendeten Hochfrequenzwellen. Bei diesen Hochfrequenzwellen kann es sich insbesondere um Millimeterwellen handeln. Die effektive Länge er einzelnen Antennen kann insbesondere etwa bei λ,λ/2 oder λ/4 liegen. Wenn die effektive Länge der Antennen in einer solchen Beziehung zur verwendeten Wellenlänge steht, hängt das gemessene Signal besonders empfindlich von Veränderungen der Antennenlänge durch eine Schädigung der Oberfläche ab.

Allgemein vorteilhaft können die Hochfrequenz-Antennen ein regelmäßiges zweidimensionales Gitter bilden, wobei zumindest in einer Raumrichtung die Wiederholungslänge zwischen 1 mm und 10 cm liegt. Insbesondere kann die räumliche Wiederholungslänge (also der Pitch) in diesem Bereich liegen. In jedem Fall ist es vorteilhaft, wenn auch der Pitch in einer ähnlichen Größenordnung wie die für die Messung verwendete Wellenlänge liegt, da dann das gemessene Signal besonders empfindlich von einer Veränderung in der Regelmäßigkeit des Gitters abhängt (z.B. durch eine Dehnung, Stauchung und/oder Verwölbung der Oberfläche).

Die eigentliche Radarmessung in den Schritten a) und b) kann auf unterschiedliche Weise durchgeführt werden. So können bei einer ersten Ausführungsvariante die Schritte a) und b) jeweils mehrfach hintereinander ausgeführt werden, so dass insgesamt eine ortsaufgelöste Hochfrequenz-Messung erfolgt. Hierfür können zwischen den Einzelmessungen a-i) und b-i) jeweils einzelne geometrische Parameter verändert werden, insbesondere die Entfernung und Lage von Sendeantennen der Sendeeinrichtung und/oder Empfangsantennen der Empfangseinrichtung relativ zu der zu vermessenden Oberfläche. Auf diese Weise kann ein räumliches Bild der Oberfläche erhalten werden, so dass diese Ausführungsvariante auch eine räumliche Lokalisation von möglicherweise vorhandenen Beschädigungen der Oberfläche erlaubt.

Gemäß einer alternativen, zweiten Ausführungsvariante können die Schritte a) und b) bei einem Überwachungs-Zyklus aber auch insgesamt nur einmal ausgeführt werden. Mit anderen Worten kann eine Klassifizierung des Alterungszustands zu einem gegebenen Zeitpunkt hier aus einer einzigen Gesamtmessung abgeleitet werden. Eine räumliche Abrasterung ist also nicht zwingend nötig, um den Alterungszustand zu klassifizieren, denn auch das Gesamtsignal (in das die Wechselwirkung der Hochfrequenzwellen mit vielen auf der Oberfläche vorhandenen Antennen eingeht) kann bei dem erfindungsgemäßen Verfahren sehr empfindlich von lokalen Veränderungen der einzelnen Antennen abhängen. Diese zweite Ausführungsvariante ist vor allem dann besonders vorteilhaft, wenn die über die Oberfläche verteilten Hochfrequenz-Antennen insgesamt fokussierende Eigenschaften aufweisen, insbesondere bei einer rekonfigurierbaren Antennen-Anordnung, die eine Einstellung solcher fokussierender Eigenschaften erlaubt.

Allgemein kann für die Durchführung der Radarmessung in den Schritten a) und b) die Sendeeinrichtung identisch mit der Empfangseinrichtung sein. Es wird dann also ein Radargerät verwendet, das ein Array von Hochfrequenz-Antennen aufweist, wobei jede dieser Antennen wahlweise als Sendeantenne oder Empfangsantenne betrieben werden kann. Alternativ ist es aber grundsätzlich auch möglich, dass separate Sende- und Empfangseinrichtungen zum Einsatz kommen. Allgemein kann die Radarmessung insbesondere als Continuous-Wave-Messung durchgeführt werden.

Auch für die einzelnen Hochfrequenz-Antennen der zu überwachenden Oberfläche sind unterschiedliche Ausgestaltungen möglich. Gemäß einer ersten vorteilhaften Ausführungsvariante können diese Hochfrequenz-Antennen zusammen eine passive Reflektor-Anordnung ausbilden. Mit anderen Worten ist dann ein passiver Backscatter mit weitgehend festen Hochfrequenz-Eigenschaften gebildet, welche sich im Wesentlichen nur durch eine Alterung der Oberfläche verändern. Diese Variante erlaubt eine besonders einfach zu realisierende Antennen-Anordnung, welche trotzdem eine empfindliche Detektion von Oberflächen-Änderungen ermöglicht, insbesondere wenn die zur Messung verwendeten Hochfrequenzwellen von einer ähnlichen Länge sind wie die effektive Länge und/oder der Pitch der Antennen auf der Oberfläche.

Gemäß einer alternativen, zweiten Ausführungsvariante können die einzelnen Antennen zusammen eine (re-)konfigurierbare intelligente Antennen-Anordnung ausbilden. Eine derartige (re)konfigurierbare intelligente Antennen-Anordnung auf einer Oberfläche wird auch als RIS (für englisch "reconfigurable intelligent surface") bezeichnet und ist aus dem Stand der Technik grundsätzlich bekannt. Eine solche RIS-Anordnung ist dadurch gekennzeichnet, dass ein regelmäßiges Gitter gebildet ist, das nicht nur passive Hochfrequenz-Antennen, sondern auch einen konfigurierbaren Schaltkreis mit einstellbaren Bauelementen aufweist, beispielsweise mit pin-Dioden oder Transistoren. So kann eine RIS-Anordnung durch ein Gitter aus Elementarzellen gebildet sein, wobei jede Elementarzelle entweder nur eine Hochfrequenz-Antenne oder auch mehrere (unter Umständen verschieden ausgestaltete) Antennen und zusätzlich ein oder mehrere konfigurierbare Bauelemente umfassen kann. Die grundlegende Funktionsweise und mögliche Ausführungsvarianten solcher RIS-Anordnungen beschreibt das Übersichts-Paper von Marco Di Renzo et al. "Smart Radio Environments Empowered by Reconfigurable Intelligent Surfaces: How it Works, State of Research, and Road Ahead", IEEE Journal on Selected Areas in Communication, volume 38, issue 11, Nov. 2020.

Ein wesentlicher Vorteil einer solchen RIS-Anordnung ist, dass die Hochfrequenz-Eigenschaften der Oberfläche gezielt eingestellt werden können und dass die von außen eintreffenden Hochfrequenzwellen so wahlweise absorbiert, polarisiert, reflektiert, fokussiert, geteilt und/oder analog moduliert werden können. Eine solche gezielte Einstellung der Hochfrequenz-Eigenschaften kann eine besonders empfindliche Detektion von bestimmten Arten von Schädigungen ermöglichen. Insbesondere können dann auch bei einem Überwachungs-Zyklus mehrere Teilmessungen durchgeführt werden, und bei jeder Teilmessung können die Hochfrequenz-Eigenschaften der Oberfläche im Hinblick auf die gerade zu untersuchende Art von Schädigung konfiguriert werden. Dies ermöglicht eine noch empfindlichere Detektion von unterschiedlichen Arten von Schäden. Besonders vorteilhaft im Zusammenhang mit einer RIS-Anordnung ist ihre Fähigkeit, eine fokussierbare Eigenschaft der Oberfläche einstellen zu können und so eine Erfassung eines einheitlichen Gesamtsignals (ohne lokale Abrasterung der Oberfläche) zu ermöglichen, welches trotzdem empfindlich auf lokale Schädigungen an einer Vielzahl von Orten auf der Oberfläche reagiert.

Auch bei der Art der Anordnung der einzelnen Hochfrequenz-Antennen auf der zu überwachenden Oberfläche sind unterschiedliche Ausführungsvarianten möglich. Gemäß einer ersten vorteilhaften Ausführungsvariante sind die Hochfrequenz-Antennen direkt auf eine Oberfläche des Begrenzungselements aufgebracht. Bei dem Begrenzungselement kann es sich allgemein beispielsweise um ein Karosserie-Element eines Fahrzeugs oder um ein Gehäuse-Element eines medizintechnischen Geräts, einer Industrieanlage oder einer anderen Art von technischem Gerät handeln. Ein solches Begrenzungselement kann auf seiner außenliegenden Oberfläche beispielsweise mit den Hochfrequenz-Antennen direktbeschichtet sein. Insbesondere können diese Antennen direkt auf eine solche außenliegende Oberfläche aufgedruckt sein. Dadurch wird eine besonders einfache Herstellung einer mit dem beschriebenen Verfahren zu überwachenden Vorrichtung ermöglicht, denn bei einer solchen Direktbeschichtung können auch komplex geformte, unebene Oberflächen auf einfache Weise mit den entsprechenden Antennen funktionalisiert werden.

Gemäß einer alternativen, zweiten Ausführungsvariante für die Anordnung der Antennen können diese in das Volumen des Begrenzungselements integriert sein. So können beispielsweise die Antennen in regelmäßigen Abständen in das Volumen eines Spritzguss-Elements eines Gehäuses eingegossen sein. Eine solche Anordnung ermöglicht eine hohe Flexibilität hinsichtlich der an der Außenfläche vorliegenden Materialien, die dann insbesondere auch kompatibel mit Reinigungs- und Desinfektionsprozessen sein können. Die Hochfrequenz-Antennen beinträchtigen dann insbesondere nicht die Robustheit der außenliegenden Oberfläche. Allgemein ist es aber auch bei dieser Variante vorteilhaft, wenn die Hochfrequenz-Antennen oberflächennah angeordnet sind und wenn sie nach außen hin nicht durch elektrisch leitfähige Materialien abgeschirmt sind. Dies beides kann bei einer Integration in eine Kunststoffwand jedoch relativ einfach gewährleistet sein.

Gemäß einer alternativen, dritten Ausführungsvariante für die Anordnung der Antennen können diese auf einer nichtleitenden Trägerschicht angeordnet sein, die auf einer Außenfläche des Begrenzungselements aufgebracht ist. Insbesondere kann die Trägerschicht dann zusammen mit den Antennen eine vorgefertigte Folie bilden, welche als funktionalisierende Haut auf einer Außenfläche der Vorrichtung angebracht wird. Diese zusätzliche Haut ermöglicht dann die Überwachung der Oberflächen-Alterung mit dem beschriebenen Verfahren. Da die Haut als vorgefertigtes Bauteil im Ganzen außen angebracht werden kann, ist hier die Herstellung besonders einfach. Wenn die Folie hinreichend flexibel ist, kann eine solche Funktionalisierung auch bei dieser Variante auf komplex geformte, unebene Oberflächen angebracht werden. Die Antennen können prinzipiell entweder innenliegend oder außenliegend auf der Trägerschicht angeordnet sein. Eine innenliegende Anordnung kann den Vorteil mit sich bringen, dass die Antennen für den Benutzer der Vorrichtung nicht sichtbar sind, insbesondere wenn die Folie nicht transparent ist. Eine außenliegende Anordnung ermöglicht aber gegebenenfalls eine noch empfindlichere Detektion von Schädigungen der Oberfläche. Falls die übrigen Teile der Oberfläche aber robuster sind als die einzelnen Antennen, kann die innenliegende Anordnung wiederum vorteilhaft sein, um nicht zu empfindlich zu reagieren und nur relevante Alterungs-Effekte zu erfassen.

Allgemein und unabhängig von ihrer genauen Anordnung können die Hochfrequenz-Antennen zur äußeren Umgebung hin von einer elektrisch nichtleitenden Deckschicht bedeckt sein. Diese Deckschicht kann insbesondere blickdicht ausgeführt sein, so dass die einzelnen Antennen von außen für einen Benutzer der Vorrichtung nicht sichtbar sind. Eine nichtleitende Ausführung der Deckschicht ist allgemein zweckmäßig, um die Antennen bei der Messung nicht gegen die von außen einwirkenden Hochfrequenzwellen abzuschirmen.

Optional kann im außenliegenden Bereich der Vorrichtung auch beispielsweise ein Label mit Metainformationen über die betreffende Vorrichtung angeordnet sein. Dies kann beispielsweise ein NFC-Modul sein (NFC für englisch "Near Field Communication"), welches Informationen zu der individuellen Vorrichtung enthält wie beispielsweise auch ein im Ursprungszustand gemäß den vorab beschriebenen Schritten a0) und b0) erhaltenes Referenzsignal, welches dann mit dem bei einem bestimmten Überwachungszyklus gemessenen Signal verglichen werden kann.

Die Vorteile der Erfindung kommen bei einer Vorrichtung, welche als Gerät der Medizintechnik ausgebildet ist, besonders wirksam zum Tragen. Dies liegt vor allem daran, dass medizintechnische Geräte möglichst keimfrei gehalten werden müssen und dazu regelmäßig desinfiziert werden müssen. Die Oberflächen werden dabei chemisch und mechanisch stark beansprucht und können daher einer schnellen Alterung unterliegen. Gerade bei solchen Oberflächen ist es aber besonders wichtig, Schädigungen früh zu erkennen, da die Ausbildung von Rissen und Unebenheiten dazu führen kann, dass Keime sich ablagern und eine zuverlässige Desinfektion erschwert ist.

Auch bei der außenliegenden Oberfläche eines Fahrzeugs kommen die Vorteile der Erfindung wirksam zum Tragen. So kann zum Beispiel die beschriebene Radarmessung dazu genutzt werden, um eine schnelle und automatisierte Überwachung der Karosserie auf mechanische Schädigungen durchzuführen. Beispielsweise bei einem Mietwagen oder einem anderen von vielen Personen genutzten Fahrzeug kann eine regelmäßige, automatisierte Überwachung auf Deformationen in der Fahrzeugoberfläche sinnvoll sein, um die Entstehung von Schäden und damit ggf. auch deren Verursacher nachvollziehen zu können. Aber auch bei einem Luftfahrzeug, z.B. bei der Inspektion von sicherheitsrelevanten Teilen wie den Tragflächen eines Flugzeugs können die Vorteile der Erfindung zum Einsatz kommen.

Aber auch bei außenliegenden Oberflächen von Industrieanlagen kann es sehr zweckmäßig sein, diese Oberflächen auf die beschriebene Weise zu funktionalisieren und auf Schädigungen zu überwachen. Dies ist vor allem im Bereich der "Predictive Maintenance" (also der vorausschauenden Instandhaltung) von industriellen Anlagen zweckmäßig, da das erfindungsgemäße Verfahren durch die objektive und automatisierte Klassifizierung des Alterungszustands auch eine Vorhersage über die mögliche weitere Betriebsdauer der jeweiligen Vorrichtung und damit eine Planung von notwendigen Reparaturen oder eines notwendigen Austauschs erlaubt. Insbesondere können mechanisch stark beanspruchte Flächen wie zum Beispiel Reibflächen einer Fertigungsanlage mit dem beschriebenen Verfahren auf Schädigungen überwacht werden.

Allgemein und unabhängig von der genauen Ausgestaltung der Vorrichtung können die einzelnen Hochfrequenz-Antennen gedruckte Antennen sein. Geeignete Druckverfahren für die Aufbringung dieser Antennen sind beispielsweise Inkjetten, Jetten, Aerosol Jet Printing, Offsetdruck, Siebdruck oder Schablonendruck. Aber auch thermische Sprühverfahren wie Plasmasprühen und Cold Spray können verwendet werden, ebenso wie subtraktive Fertigungsverfahren wie Fräsen oder Dünnfilmprozesse oder eine Laserstrukturierung, insbesondere bei einer dreidimensional geformten Oberfläche. Insgesamt ist eine Vielzahl von möglichen Fertigungsverfahren verfügbar, um die beschriebenen Antennen-Anordnungen einfach und kostengünstig auf die Vorrichtung aufzubringen oder oberflächennah in die Vorrichtung einzubringen. Hierzu kann, wie bereits beschrieben, entweder ein Begrenzungselement direkt mit den Antennen beschichtet werden oder die Antennen können vorab auf eine Trägerfolie aufgebracht werden, mit der die Vorrichtung dann funktionalisiert wird.

Nachfolgend wird die Erfindung anhand einiger bevorzugter Ausführungsbeispiele unter Bezugnahme auf die angehängten Zeichnungen beschrieben, in denen:
- Figuren 1 und 2: schematische Schnittdarstellungen einer Vorrichtung zeigen, die mit dem erfindungsgemäßen Verfahren überwacht werden kann,
- Figur 3: eine schematische Aufsicht auf die Oberfläche einer solchen Vorrichtung zeigt und
- Figuren 4 und 5: schematische Schnittdarstellungen von weiteren alternativen Vorrichtungen zeigen.

In den Figuren sind gleiche oder funktionsgleiche Elemente mit gleichen Bezugszeichen versehen.

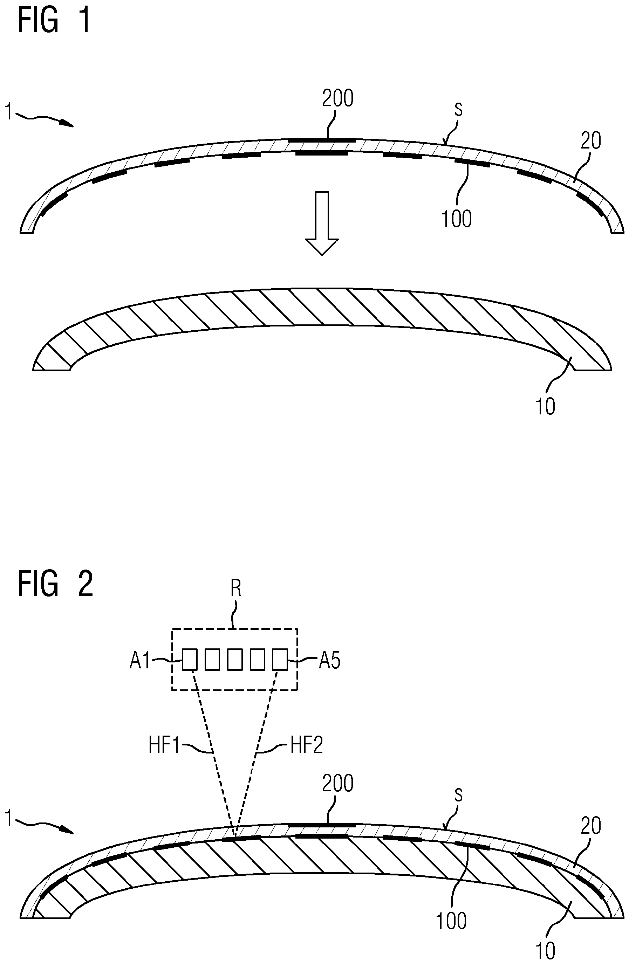

In Figur 1 ist eine schematische Querschnittsdarstellung eines Teilausschnitts einer erfindungsgemäßen Vorrichtung 1 während ihrer Herstellung gezeigt. Figur 2 zeigt dieselbe Vorrichtung 1 im fertig montierten Zustand. Diese Vorrichtung 1 ist dazu ausgelegt, mit dem erfindungsgemäßen Verfahren auf eine Beschädigung ihrer außenliegenden Oberfläche s überwacht zu werden. Die Vorrichtung 1 gemäß diesem ersten Ausführungsbeispiel weist ein Begrenzungselement 10 auf, welches beispielsweise ein Gehäuseelement oder eine andere Art von äußerer Hülle der Vorrichtung darstellen kann. Auch von diesem Begrenzungselement 10 ist hier nur ein Teilausschnitt gezeigt. Nur beispielhaft ist hier ein konvex geformtes Begrenzungselement gezeigt, um deutlich zu machen, dass die relevante Außenfläche keine ebene Fläche sein muss. Bei dem in Figur 1 dargestellten Prozessschritt wird das Begrenzungselement 10 auf seiner außenliegenden Seite mit einer Trägerschicht 20 verbunden, welche beispielsweise eine flexible Polymerfolie sein kann. Auf dieser Trägerschicht 20 ist innenliegend eine Mehrzahl von Hochfrequenz-Antennen 100 aufgebracht, beispielsweise durch einen Druckprozess. Auf der außenliegenden Oberfläche s der Trägerschicht 20 ist zusätzlich noch ein optionales NFC-Modul 200 angeordnet, in dem insbesondere Kenndaten über diese individuelle Vorrichtung 1 gespeichert sein können. Insgesamt liegt also eine vorgefertigte funktionelle Haut aus Trägerschicht 20, Hochfrequenz-Antennen 100 und dem optionalen NFC-Modul 200 vor, mit der das Begrenzungselement 10 auf seiner Außenseite funktionalisiert wird.

In dem in Figur 1 gezeigten Herstellungsschritt wird die vorgefertigte Haut mit dem Begrenzungselement 10 verbunden (wie durch den dicken Pfeil angedeutet), und beispielsweise auf dieses auflaminiert. So entsteht ein dauerhafter Verbund zwischen dem Begrenzungselement 10 und der Trägerschicht 20, was dem fertigen Zustand der Figur 2 entspricht. Die gezeigten neun Hochfrequenz-Antennen 100 stehen beispielhaft für ein regelmäßiges zweidimensionales Gitter aus einer Vielzahl solcher Antennen, die über die Oberfläche der Vorrichtung verteilt angeordnet sein können. Jede dieser Antennen ist aus einem elektrisch leitfähigen Material gebildet und weist eine effektive Länge auf, die insbesondere im Millimeter-Bereich (also z.B. zwischen einem Millimeter und einigen Zentimetern) liegen kann.

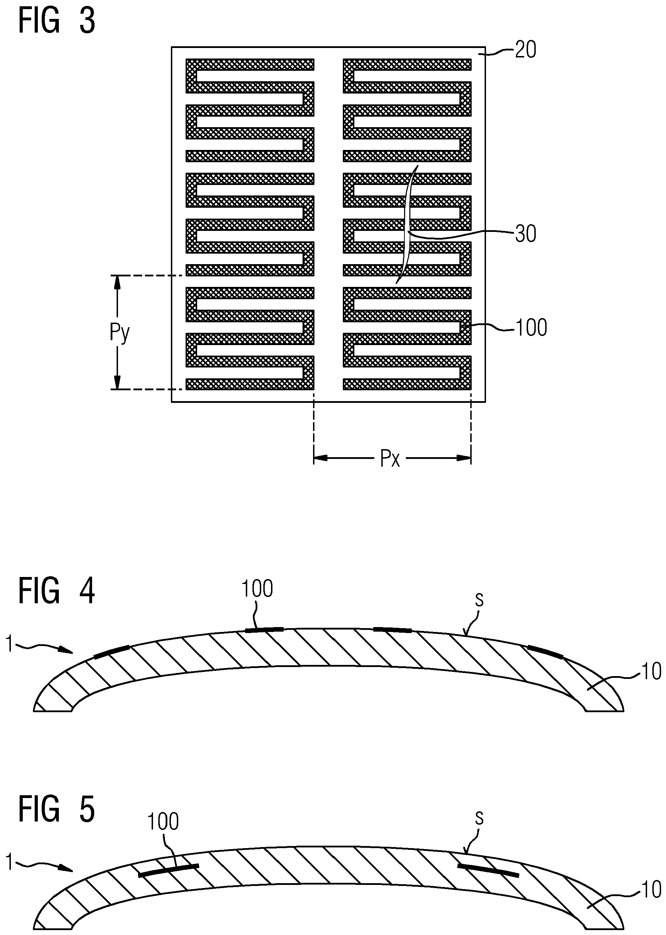

Figur 3 zeigt eine schematische Aufsicht auf die Oberfläche einer solchen oder ähnlichen Vorrichtung, in der die Struktur der dort aufgebrachten Antennen 100 sichtbar ist. Gezeigt ist eine Aufsicht auf die Trägerfolie 20 der Vorrichtung der Figuren 1 und 2. Der dargestellte Bereich weist hier sechs Hochfrequenz-Antennen 100 auf, die jeweils als mäanderförmige gebogene längliche Leiterbahnen ausgebildet sind. Sie können beispielsweise durch Aufdrucken einer elektrisch leitfähigen Schicht auf die Trägerschicht 20 ausgebildet sein. Diese Antennen müssen aber nicht zwangsläufig mäanderförmig sein. Alternativ können sie auch nach Art einer Spule geformt sein oder L-förmig, T-förmig oder als gerade Leierabschnitte gebildet sein. Mit Px ist hier der Pitch (also die räumliche Wiederholungslänge) in x-Richtung bezeichnet und mit Py die räumliche Wiederholungslänge in y-Richtung. Auch diese beiden Längen Px und Py liegen hier im Bereich einiger Millimeter.

Die Vorrichtung nach dem Beispiel der Figuren 1 bis 3 ist dazu ausgelegt, mit dem erfindungsgemäßen Verfahren im Hinblick auf eine Schädigung ihrer außenliegenden Oberfläche s überwacht zu werden. So ist in Figur 2 äußerst schematisch die Durchführung der Schritte a) und b) des erfindungsgemäßen Verfahrens gezeigt, bei denen die Oberfläche durch eine Radarmessung untersucht wird. Hierzu werden mittels einer Sendeeinrichtung eines Radargeräts R Hochfrequenzwellen HF1 auf die Oberfläche s eingestrahlt. Diese Hochfrequenzwellen treten in Wechselwirkung mit der Oberfläche und können beispielsweise von den oberflächennahen Hochfrequenz-Antennen 100 reflektiert werden. Die reflektierten Hochfrequenzwellen HF2 werden dann von einer Empfangseinrichtung des Radargeräts R empfangen, wodurch ein Messignal erzeugt wird. Beim Beispiel der Figur 2 weist das Radargerät R ein Antennen-Array auf, von dem zum Beispiel eine Antenne A1 als Sende-Antenne und eine andere Antenne A5 als Empfangs-Antenne konfiguriert ist. Diese Konfiguration ist jedoch nur exemplarisch zu verstehen, und es können auch mehrere Antennen als SendeAntennen und/oder mehrere Antennen als Empfangs-Antennen konfiguriert sein, und das Antennen-Array des Radargeräts R kann insgesamt eine wesentlich höhere Anzahl und eine abweichende geometrische Anordnung von Einzel-Antennen umfassen. Alternativ zu der hier dargestellten Ausführungsform können Sendeund Empfangs-Vorrichtung auch in separaten Vorrichtungen realisiert sein. Weiterhin muss die Wechselwirkung der eintreffenden Hochfrequenzwellen HF1 nicht auf den dargestellten engen lokalen Bereich begrenzt sein. Dies ist zwar grundsätzlich möglich - insbesondere wenn die Messung nacheinander an mehreren Orten und somit ortsaufgelöst erfolgt. Alternativ kann aber auch ein größerer Bereich der Oberfläche gleichzeitig mit den Hochfrequenzwellen in Wechselwirkung treten, so dass in einem Schritt ein Gesamtsignal gemessen wird.

Weiterhin ist die Wechselwirkung zwischen der Anordnung von Hochfrequenz-Antennen 100 und den auftreffenden Hochfrequenzwellen HF1 nicht auf eine reine Reflexion der Strahlung beschränkt. Grundsätzlich können die Hochfrequenz-Antennen 100 zwar einen passiven Reflektor ausbilden. Alternativ kann es sich aber auch um eine rekonfigurierbare intelligente Antennen-Anordnung (also ein RIS) handeln. Bei dieser Ausführungsform ist die Vorrichtung nicht nur mit den gezeigten Antennen, sondern mit einem hier nicht dargestellten zusätzlichen Schaltkreis aus konfigurierbaren Bauelementen (z.B. pin-Dioden) funktionalisiert. Das so erhaltene intelligente Antennen-Array ermöglicht es, dass die einstrahlenden Hochfrequenzwellen abhängig von der aktuellen Konfiguration wahlweise absorbiert, polarisiert, reflektiert, fokussiert, geteilt und/oder analog moduliert werden können.

In jedem Fall ermöglicht die beschriebene Radarmessung eine Überwachung der Vorrichtung 1 im Hinblick auf eine Alterung ihrer Oberfläche, insbesondere auf eine Veränderung der geometrischen Eigenschaften der oberflächennahen Bereiche während der Betriebsdauer der Vorrichtung. Hierzu wird das durch die Radarmessung erhaltene Messsignal mit einem Referenzsignal einer unbeschädigten Vorrichtung verglichen. Beispielsweise kann das Referenzsignal bei einer früheren Messung der ungealterten Vorrichtung erhalten worden sein. Dieses Referenzsignal kann insbesondere in dem NFC-Modul abgespeichert sein und aus diesem bei Bedarf ausgelesen werden. Durch eine Differenzbildung von Messsignal und Referenzsignal kann ein Differenzsignal erhalten werden, das mit ein oder mehreren Schwellwerten verglichen werden kann. Abhängig von diesem Vergleich kann eine objektive Klassifizierung des Alterungszustands der Oberfläche erfolgen.

Als Beispiel für eine Beschädigung, die mit dem beschriebenen Verfahren leicht erkannt werden kann, ist in Figur 3 ein obenflächennaher Riss 30 gezeigt. Dieser Riss 30 bildet eine Einkerbung, die durch die Trägerschicht 20 hindurch geht und die betreffende Antenne 100 in mehrere leitfähige Teilstücke trennt. Hierdurch werden die Reflexions-Eigenschaften der Antenne für Millimeterwellen verändert, was sich als Änderung des Messsignals bemerkbar macht. In ähnlicher Weise können auch großräumige Veränderungen der Oberfläche detektiert werden, da z.B. eine Dehnung, Stauchung oder Verwölbung des Begrenzungselements 10 eine Änderung der räumlichen Wiederholungslänge Px bzw. Py zur Folge hat. Insgesamt kann durch eine solche Radarmessung eine alterungsbedingte Veränderung der Oberfläche sehr einfach detektiert werden, wobei die oberflächennahe Anordnung der Hochfrequenz-Antennen 10 die Empfindlichkeit dieser Detektion wesentlich erhöht.

In Figur 4 ist eine schematische Schnittdarstellung einer zu überwachenden Vorrichtung 1 nach einem weiteren Beispiel der Erfindung gezeigt. Bei dieser Vorrichtung 1 liegt keine zusätzliche Trägerschicht 20 vor, sondern die Außenfläche s des Begrenzungselements 10 ist direkt mit den Hochfrequenz-Antennen 100 beschichtet. Nur beispielhaft ist hier ein etwas dünner besetztes Gitter von Hochfrequenz-Antennen 100 angedeutet. Ansonsten kann die Antennen-Anordnung aber auch ähnlich wie bei dem vorhergehenden Beispiel ausgestaltet sein. Die Antennen müssen bei dieser Direktbeschichtungs-Variante nicht zwangsläufig nach außen hin offenliegen, sondern können bei Bedarf auch bei diesem Beispiel von einer zusätzlichen nichtleitenden Deckschicht abgedeckt sein.

In Figur 5 ist eine schematische Schnittdarstellung einer zu überwachenden Vorrichtung 1 nach einem weiteren Beispiel der Erfindung gezeigt. Bei diesem Beispiel sind die Hochfrequenz-Antennen 100 nicht auf einer Außenfläche des Begrenzungselements 10 angeordnet, sondern sie sind in das Volumen des Begrenzungselements 10 eingebettet. Beispielsweise kann das Begrenzungselement 10 ein spritzgegossenes Gehäuseelement sein, in das die Antennen 10 (entweder einzeln oder auch wiederum als Array auf einer hier nicht dargestellten gemeinsamen Trägerstruktur) eingegossen worden sind. Auch bei diesem Beispiel ergibt sich eine oberflächennahe Antennen-Anordnung, die eine Detektion von Veränderungen der Oberflächenform über eine Radarmessung erlaubt.

### Bezugszeichenliste

- 1: Vorrichtung
- 10: Begrenzungselement
- 20: Trägerschicht (Folie)
- 30: Beschädigung (Riss)
- 100: Hochfrequenz-Antenne
- 200: NFC-Modul
- A1: Sende-Antenne
- A5: Empfangs-Antenne
- HF1: auftreffende Hochfrequenzwellen
- HF2: reflektierte Hochfrequenzwellen
- Px: Pitch in x-Richtung
- Py: Pitch in y-Richtung
- R: Radargerät
- s: außenliegende Oberfläche

## Patentansprüche

1. Verfahren zur Überwachung der Alterung einer Oberfläche (s) einer Vorrichtung (1),
- wobei die Vorrichtung (1) im Bereich ihrer außenliegenden Oberfläche (s) ein Begrenzungselement (10) aufweist,
- wobei das Begrenzungselement (10) mit wenigstens einer Hochfrequenz-Antenne (100) und insbesondere mit einem flächigen Gitter aus einer Vielzahl von Hochfrequenz-Antennen (100) versehen ist,
- wobei das Verfahren wenigstens die folgenden Schritte aufweist:
a) Einstrahlung von Hochfrequenzwellen (HF1) auf die Oberfläche (s) mittels einer Sendeeinrichtung (A1) eines Radargeräts (R),
b) Erfassung von durch die Oberfläche reflektierten Hochfrequenzwellen (HF2) mittels einer Empfangseinrichtung (A2) eines Radargeräts (R),
c) Vergleich eines so erhaltenen Messsignals mit einem Referenzsignal einer unbeschädigten Vorrichtung.

2. Verfahren nach Anspruch 1, bei welchem das Begrenzungselement (10) mit einem regelmäßigen flächigen Gitter aus einer Vielzahl von Hochfrequenz-Antennen (100) versehen ist.

3. Verfahren nach einem der Ansprüche 1 oder 2, bei welchem das Referenzsignal durch eine vorhergehende Messung an derselben Vorrichtung (1) im ungealterten Zustand erhalten wird.

4. Verfahren nach einem der Ansprüche 1 bis 3 mit den Schritten:
c1) Bildung eines Differenzsignals zwischen dem Messsignal und dem Referenzsignal und
c2) Klassifizierung der Alterung der Oberfläche anhand des Vergleichs des Differenzsignals mit ein oder mehreren vordefinierten Schwellwerten.

5. Verfahren nach einem der vorhergehenden Ansprüche, bei welchem die effektive Länge der einzelnen Hochfrequenz-Antennen (100) zwischen 1 mm und 10 cm liegt.

6. Verfahren nach einem der vorhergehenden Ansprüche, bei welchem die Hochfrequenz-Antennen (100) ein regelmäßiges zweidimensionales Gitter bilden,
wobei zumindest in einer Raumrichtung die Wiederholungslänge (Px,Py) zwischen 1 mm und 10 cm liegt.

7. Verfahren nach einem der vorhergehenden Ansprüche, bei welchem die Schritte a) und b) mehrfach ausgeführt werden, so dass eine ortsaufgelöste Hochfrequenz-Messung erfolgt.

8. Verfahren nach einem der Ansprüche 1 bis 6, bei welchem die Schritte a) und b) bei einem Überwachungs-Zyklus insgesamt nur einmal ausgeführt werden.

9. Verfahren nach einem der vorhergehenden Ansprüche, bei welchem die Vielzahl von Hochfrequenz-Antennen (100) zusammen eine passive Reflektor-Anordnung ausbilden.

10. Verfahren nach einem der Ansprüche 1 bis 8, bei welchem die Vielzahl von Hochfrequenz-Antennen (100) zusammen eine intelligente rekonfigurierbare Antennen-Anordnung ausbilden

11. Verfahren nach einem der vorhergehenden Ansprüche, bei welchem die Hochfrequenz-Antennen (100) direkt auf eine Oberfläche (s) des Begrenzungselements (10) aufgebracht sind.

12. Verfahren nach einem der Ansprüche 1 bis 10, bei welchem die Hochfrequenz-Antennen (100) in das Volumen des Begrenzungselements (10) integriert sind.

13. Verfahren nach einem der Ansprüche 1 bis 10, bei welchem die Hochfrequenz-Antennen (100) auf einer nichtleitenden Trägerschicht (20) angeordnet sind, die auf einer Außenfläche des Begrenzungselements (10) aufgebracht ist.

14. Verfahren nach einem der vorhergehenden Ansprüche, bei welchem die Hochfrequenz-Antennen (100) zur äußeren Umgebung hin von einer nichtleitenden Deckschicht (20) bedeckt sind.

15. Vorrichtung (1),
- welche im Bereich ihrer außenliegenden Oberfläche (s) ein Begrenzungselement (10) aufweist,
- wobei das Begrenzungselement (10) mit einem flächigen Gitter aus einer Vielzahl von Hochfrequenz-Antennen (100) versehen ist,
- und wobei die Vorrichtung (1) entweder ein Gerät der Medizintechnik oder ein Fahrzeug oder eine Industrieanlage ist.
